**Europäisches Patentamt**

**European Patent Office**

**Office européen des brevets**

(11) Numéro de publication: **0 249 670**
**B1**

## (12) FASCICULE DE BREVET EUROPEEN

(45) Date de publication du fascicule du brevet:
**07.11.90**

(21) Numéro de dépôt: **86401334.7**

(22) Date de dépôt: **18.06.86**

(51) Int. Cl.⁵: **B29C 45/14**, B29C 49/24,
B29C 51/16

(54) Système d'amenée d'une pellicule, formant revêtement au moins partiel d'un objet moulé, dans un moule.

(43) Date de publication de la demande:
**23.12.87 Bulletin 87/52**

(45) Mention de la délivrance du brevet:
**07.11.90 Bulletin 90/45**

(84) Etats contractants désignés:
**AT BE CH DE GB IT LI LU NL SE**

(56) Documents cités:
**EP-A- 0 083 766**
**DE-A- 2 657 753**
**FR-A- 1 593 056**
**FR-A- 2 009 611**
**FR-A- 2 108 854**
**US-A- 3 953 020**
**US-A- 4 204 824**
**US-A- 4 359 314**
**US-A- 4 368 018**

(73) Titulaire: **TOLKKI OY, Kalkkimaentie 2,
03100 Nummela(FI)**

(72) Inventeur: **Dromigny, Pierre, 54, avenue de Versailles,
F-75016 Paris(FR)**
Inventeur: **Schottli, Théodore, Formenbau,
CH-8253 Diessenhofen(CH)**

(74) Mandataire: **Bonnetat, Christian, CABINET
BONNETAT 23, Rue de Léningrad, F-75008 Paris(FR)**

ACTORUM AG

## Description

La présente invention concerne un système d'amenée d'une pellicule, formant revêtement au moins partiel d'un objet moulé, entre la partie fixe d'un moule et la partie de celui-ci qui est mobile, selon une direction de déplacement prédéterminée, par rapport à la partie fixe.

Par le brevet US-A 4 368 018, on connaît un système de ce type comprenant:

– un dispositif de transfert, une à une, des pellicules prédécoupées au format choisi d'un magasin dans une position d'attente au voisinage du moule; et
– un dispositif de transport de la pellicule, de la position d'attente à une position de travail dans laquelle la pellicule se trouve entre les parties fixe et mobile du moule, comportant des moyens de maintien de la pellicule pendant son transport de la position d'attente à la position de travail, et deux moyens coopérants engrenés l'un avec l'autre, l'un desdits moyens coopérants étant une crémaillère.

Dans ce système connu, lesdits moyens coopérants engrenés l'un avec l'autre sont constitués par une crémaillère et par une roue dentée et on obtient un mouvement de va-et-vient parallèle au plan de la face frontale de la partie fixe du moule. De ce fait, l'amenée de la pellicule dans la partie de moule mobile est compliquée et elle prend du temps.

La présente invention a pour objet d'éviter ces inconvénients en proposant un système d'amenée d'une pellicule entre les parties fixe et mobile d'un moule qui soit efficace quelles que soient les dimensions de la pellicule par rapport à l'objet à mouler.

A cette fin, selon l'invention, le système du type rappelé ci-dessus est caractérisé en ce que l'autre desdits moyens coopérants est également une crémaillère, et en ce que la première crémaillère est parallèle à la direction de déplacement (X, X') de la partie mobile du moule et solidaire d'une des parties de ce dernier, et la seconde crémaillère est solidaire des moyens de maintien de la pellicule et peut coulisser dans la partie mobile du moule, de sorte que tout mouvement de la partie mobile, selon la direction de déplacement (X, X') précitée, par rapport à la partie fixe, entraîne le coulissement de la seconde crémaillère dans la partie mobile du moule et un déplacement déterminé concomitant, dans un plan parallèle à la face avant du moule, desdits moyens de maintien, vers ou au loin de ladite face avant.

De préférence, les première et seconde crémaillères sont orthogonales et ont des dents présentant, par exemple, un angle au moins sensiblement égal à 45° par rapport à leur axe longitudinal.

Selon une autre caractéristique de l'invention, la première crémaillère est solidaire de la partie fixe du moule et traverse, ainsi qu'au moins une partie de la deuxième crémaillère, un boîtier commun solidaire de la partie mobile.

Selon une autre caractéristique de l'invention, les moyens de maintien de la pellicule comprennent au moins un moyen d'aspiration, tel qu'une buse, porté par un bras, généralement parallèle au plan de la pellicule transportée, dont une extrêmité est solidaire de la seconde crémaillère et l'autre extrêmité peut coulisser le long d'un montant de guidage solidaire de la partie mobile du moule.

Selon encore une autre caractéristique de l'invention, le dispositif de transfert est situé généralement au-dessus du moule et comprend au moins un moyen d'aspiration, tel qu'une buse, solidaire de la partie mobile du moule et pouvant passer à travers la face avant du magasin de pellicules dont les parois latérales de la partie avant sont munies de glissières internes se faisant face situées immédiatement en dessus, en position fermée du moule, de glissières solidaires de la partie mobile du moule et prévues au-dessus de la face avant de celle-ci.

Selon encore une autre caractéristique de l'invention, au moins un moyen d'aspiration, tel qu'une buse, est prévu dans la partie mobile du moule pour le maintien de l'étiquette en position de travail, une fois celle-ci amenée par le dispositif de transfert.

L'invention sera mieux comprise et d'autres détails, avantages et caractéristiques de celle-ci apparaîtront plus clairement à la lumière de la description explicative qui va suivre d'un mode de réalisation actuellement préféré de l'invention, faite en référence aux dessins schématiques annexés dans lesquels :

- la figure 1 est une vue de côté schématique, en coupe partielle, d'un système d'amenée d'une pellicule entre les parties fixe et mobile d'un moule ; et,
- la figure 2 est une vue de face, en coupe partielle, de la partie mobile du moule comportant le dispositif de transport d'une pellicule d'une position d'attente à une position de travail, selon l'invention.

En se référant aux dessins, le système 1 d'amenée d'une pellicule 2, formant revêtement au moins partiel d'un objet moulé, entre la partie fixe 4 d'un moule 3 et la partie 5 de celui-ci qui est mobile, selon une direction de déplacement X,X' prédéterminée, par rapport à la partie fixe 4, comprend un dispositif 6 de transfert, une à une, des pellicules prédécoupées au format choisi d'un magasin 7 dans une position d'attente au voisinage du moule, et un dispositif de transport 8 de la pellicule, de la position d'attente à une position de travail dans laquelle la pellicule 2 se trouve entre les parties fixe 4 et mobile 5 du moule 3.

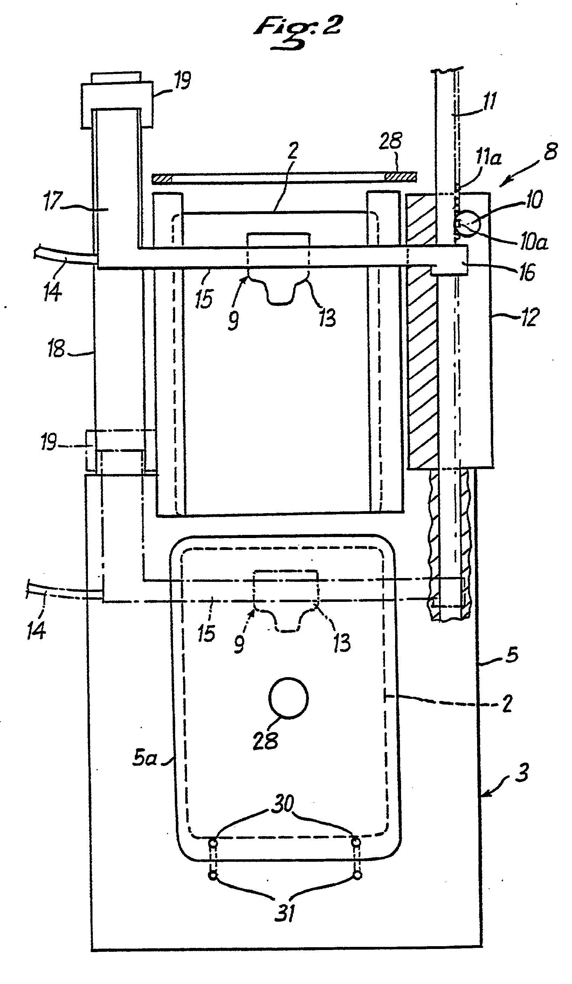

En se référant plus particulièrement à la figure 2, le dispositif de transport 8 comprend des moyens de maintien 9 de la pellicule 2 pendant son transport de la position d'attente à la position de travail, et deux moyens coopérants 10,11 du type crémaillère ou vis, engrenés l'un avec l'autre. Le premier moyen 10 est parallèle à la direction de déplacement X,X' de la partie mobile 5 du moule 3, et est solidaire d'une des parties 4,5 de ce dernier. Le second moyen 11 est solidaire des moyens de maintien 9 de la pellicule et peut coulisser dans la partie mobile 5 du moule. Ainsi, tout mouvement de la partie mobile 5, selon la direction de déplacement X,X', par rapport à la partie fixe 4, entraîne le coulissement du second moyen 11 dans la partie mobile 5 du moule 3 et un déplacement déterminé concomitant, dans un plan parallèle à la face avant 5a de la partie mobile 5 du moule 3, des moyens de maintien 9, vers ou au loin de la face avant 5a de la partie mobile 5.

En particulier, les premier 10 et second 11 moyens coopérants du type crémaillère ou vis sont orthogonaux. Ils peuvent être constitués, comme dans l'exemple illustré, d'une crémaillère formée d'une barre ronde comportant, sur une partie plate longitudinale de celle-ci, des dents 10a, 11a, pouvant s'engrener les unes avec les autres, et présentant, par exemple, un angle au moins sensiblement égal à 45° par rapport à l'axe longitudinale de la barre. Avec un tel angle d'inclinaison, pour une course déterminée, par exemple horizontale, d'une desdites crémaillères, il en résulte une course verticale, de longueur identique à la première, de la seconde crémaillère. Il est bien évident que l'on pourra choisir les angles d'inclinaison des dents selon le rapport souhaité des courses des deux crémaillères que l'on souhaite obtenir. Ainsi, pour un angle d'inclinaison de, par exemple, 30°, le rapport entre les courses dex deux crémaillères sera de l'ordre de 1 : 2.

On conçoit que grâce à de tels moyens coopérants, notamment du type crémaillère, l'ouverture du moule 3 entraînera le déplacement des moyens de maintien 9, entraînant la pellicule 2, de la position d'attente à la position de travail. En effet, lors de l'ouverture du moule, le déplacement, le long de la direction X,X' de la seconde crémaillère 11, qui peut, de plus, coulisser le long de son axe longitudinal dans la partie mobile du moule, s'accompagne, du fait de l'engrènement des dents à 45°, d'un mouvement orthogonal à la direction de déplacement X,X' de la partie mobile du moule, c'est-à-dire, par exemple, vertical descendant. Les moyens de maintien 9 de la pellicule 2 étant solidaires de la seconde crémaillère 11, le mouvement de celle-ci, provoqué l'ouverture du moule, par l'intermédiaire de la première crémaillère 10 parallèle à la direction de déplacement de la partie mobile du moule, entraînera le déplacement de la pellicule de la position d'attente, située généralement au-dessus du moule, à la position de travail au voisinage de la face avant 5a de la partie mobile 5 du moule.

De-même, lors de la fermeture du moule, les moyens de maintien 9 (cette fois, bien-sûr, sans la pellicule) subiront le mouvement inverse, c'est-à-dire un déplacement de la position de travail à la position d'attente.

La première crémaillère 10 peut être notamment solidaire de la partie fixe 4 du moule 3, et sa partie d'extrémité libre traverse, ainsi qu'au moins une partie de la seconde crémaillère 11, un boîtier 12 commun solidaire de la partie mobile 5.

Comme cela est illustré, les moyens de maintien 9 de la pellicule 2 comprennent au moins un moyen d'aspiration, tel qu'une buse 13, reliée par un tuyau 14 à une source de vide (non représentée), et porté par un bras 15, généralement parallèle au plan de la pellicule transportée, dont une extrémité 16 est solidaire de la seconde crémaillère 11 et dont l'autre extrêmité 17 peut coulisser, par l'intermédiaire, par exemple, d'une douille à billes 19, le long d'un montant 18 de guidage solidaire de la partie mobile 5 du moule 3.

Le dispositif de transfert 6 est situé, dans l'exemple illustré, généralement au-dessus du moule 3 et comprend au moins un moyen d'aspiration, tel qu'une buse 20, solidaire de la partie mobile 5 du moule 3 par l'intermédiaire d'un montant 21. La buse 20 peut passer à travers la face avant 22 du magasin 7 de pellicules grâce à un orifice 23 qui y est percé. Les parois latérales 24 de la partie avant 25 du magasin 7 sont munies de glissières 26 internes se faisant face et qui sont situées immédiatement au-dessus, en position fermée du moule 3, de glissières 27 solidaires de la partie mobile 5 du moule 3 et prévues au-dessus de la face avant 5a de celle-ci. Une plaque 28 dont la fente 28a est située immédiatement au-dessus des glissières 27 est prévue immédiatement au-dessous du magasin 7 et est solidaire de la partie mobile 5 du moule 3.

On notera en outre qu'au moins un moyen d'aspiration, tel qu'une buse 29, est prévu dans la partie mobile 5 du moule 3 pour le maintien de l'étiquette en position de travail une fois celle-ci amenée par le dispositif de transfert 6, en coopération avec des butées 30 prévues dans la partie inférieure de ladite partie mobile 5 et solidaires d'éjecteurs 31.

Le système d'amenée d'une pellicule, selon la présente invention, fonctionne de la façon suivante.

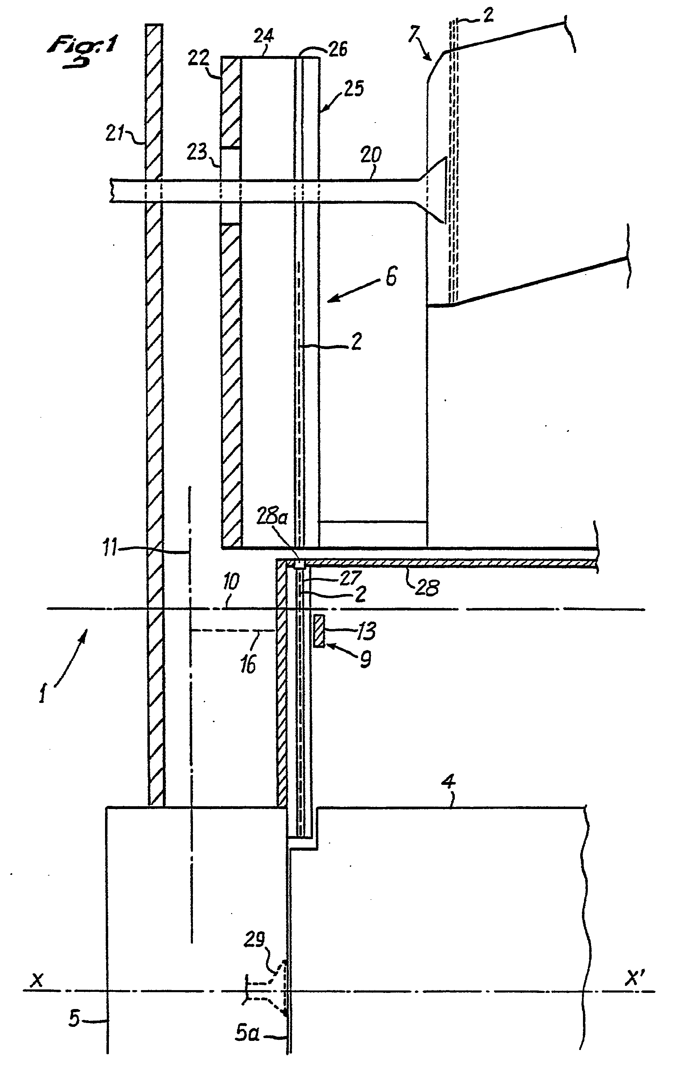

Lors de l'ouverture du moule 3 (représenté en position fermée sur la figure 1), la buse d'aspiration 20 entraîne une pellicule 2 jusqu'aux glissières 26, prévues à la partie avant du magasin 7, où celle-ci glisse jusqu'à la partie inférieure du magasin 7. Une fois le moule 3 de nouveau en position fermée, les glissières 26 sont en regard des glissières 27 dans lesquelles glisse la pellicule 2 par la fente 28a de la plaque 28 jusqu'à des butées (non représentées). La pellicule 2 est alors en position d'attente telle que définie ci-dessus, au-dessus du moule ; où elle peut alors être aspirée et maintenue sous l'action de la buse 13 (position en traits pleins sur la figure 2). En même temps que le moule s'ouvre, grâce à la liaison fonctionnelle réalisée par les deux crémaillères 10,11 et décrite ci-dessus, les moyens de maintien 9, comportant la buse d'aspiration 13, entraînant la pellicule 2 descendent parallèlement au plan de la face avant 5a de la partie mobile 5 du moule jusqu'à la position de travail en regard de cette face avant où la pellicule 2 vient en butée contre les ergots 30 escamotables en position fermée du moule (position en traits interrompus).

Puis, dès le top de fermeture du moule, l'aspiration de la buse 13 est coupée, et la pellicule 2 est alors aspirée par la buse 29 prévue dans la partie mobile 5 ; tandis que, pendant la fermeture du moule, les moyens de maintien 9 (sans la pellicule) remontent dans la position d'attente selon un mouvement inverse au premier. On obtient, de ce fait, une amenée des pellicules, quel que soit le format de celles-ci, parfaitement synchronisé avec l'ouverture-fermeture du moule.

Il est bien entendu que le moule, en lui-même, peut être d'un type quelconque connu. Par exemple, l'injection de la matière synthétique de moulage peut être réalisée à partir de la partie fixe du moule constituant la partie mâle.

## Revendications

1. Système d'amenée d'une pellicule (2), formant revêtement au moins partiel d'un objet moulé, entre la partie fixe (4) d'un moule (3) et la partie (5) de celuici qui est mobile, selon une direction de déplacement (X, X') prédéterminée, par rapport à la partie fixe (4), du type comprenant:
- un dispositif (6) de transfert, une à une, des pellicules prédécoupées au format choisi d'un magasin (7) dans une position d'attente au voisinage du moule; et,
- un dispositif de transport (8) de la pellicule, de la position d'attente à une position de travail dans laquelle la pellicule (2) se trouve entre les parties fixe (4) et mobile (5) du moule, comportant des moyens de maintien (9) de la pellicule (2) pendant son transport de la position d'attente à la position de travail, et deux moyens coopérants (10, 11) engrenés l'un avec l'autre, l'un desdits moyens coopérants étant une crémaillère,
caractérisé en ce que l'autre desdits moyens coopérants est également une crémaillère, et en ce que la première crémaillère (10) est parallèle à la direction de déplacement (X, X') de la partie mobile (5) du moule (3) et solidaire l'une des parties de ce dernier, et la seconde crémaillère (11) est solidaire des moyens de maintien (9) de la pellicule (2) et peut coulisser dans la partie mobile (5) du moule (3), de sorte que tout mouvement de la partie mobile (5), selon la direction de déplacement (X, X') précitée, par rapport à la partie fixe (4), entraîne le coulissement de la seconde crémaillère (11) dans la partie mobile (5) du moule (3) et un déplacement déterminé concomitant, dans un plan parallèle à la face avant (5a) du moule (3), desdits moyens de maintien (9), vers ou au loin de ladite face avant (5a).

2. Système selon la revendication 1, caractérisé en ce que les première (10) et seconde (11) crémaillères sont orthogonales et ont des dents (10a, 11a) présentant, par exemple, un angle au moins sensiblement égal à 45° par rapport à leur axe longitudinal.

3. Système selon la revendication 2, caractérisé en ce que la première crémaillère (10) est solidaire de la partie fixe (4) du moule (3) et traverse, ainsi qu'au moins une partie de la deuxième crémaillère (11), un boîtier commun (12) solidaire de la partie mobile (5).

4. Système selon l'une quelconque des revendications 1 à 3, caractérisé en ce que les moyens de maintien (9) de la pellicule (2) comprennent au moins un moyen d'aspiration, tel qu'une buse (13), porté par un bras (15), généralement parallèle au plan de la pellicule (2) transportée, dont une extrémité (16) est solidaire de la seconde crémaillère et l'autre extrémité (17) peut coulisser le long d'un montant (18) de guidage solidaire de la partie mobile (5) du moule (3).

5. Système selon l'une quelconque des revendications 1 à 4, caractérisé en ce que le dispositif de transfert (6) est situé généralement au-dessus du moule (3) et comprend au moins un moyen d'aspiration, tel qu'une buse (20), solidaire de la partie mobile (5) du moule (3) et pouvant passer à travers la face avant (22) du magasin (7) de pellicules (2) dont les parois latérales (24) de la partie avant (25) sont munies de glissières (26) internes se faisant face situées immédiatement au-dessus, en position fermée du moule, de glissières (27) solidaires de la partie mobile (5) du moule (3) et prévues au-dessus de la face avant (5a) de celle-ci.

6. Système selon l'une quelconque des revendications 1 à 5, caractérisé en ce qu'au moins un moyen d'aspiration, tel qu'une buse (29), est prévu dans la partie mobile du moule pour le maintien de l'étiquette en position de travail une fois celle-ci amenée par le dispositif de transfert (6).

## Patentansprüche

1. System zur Zufuhr eines Films (2), der eine zumindest teilweise Abdeckung eines zu formenden Artikels bilden soll, zwischen die feststehende Partie (4) und die in einer vorbestimmten Bewegungsrichtung (X, X') bezüglich der feststehenden Partie (4) bewegliche Partie (5) einer Form (3), mit:
- einer Transfervorrichtung (6), um vorher auf ein gewähltes Format zugeschnittene Filme einzeln nacheinander von einem Magazin (7) in eine Warteposition in der Nähe der Form zu überführen; und
- einer Transportvorrichtung (8) zum Transport des Films von der Warteposition in eine Arbeitsposition, in welcher sich der Film (2) zwischen der festen (4) und beweglichen (5) Partie der Form befindet, wobei Haltemittel (9) zum Halten des Films (2) während seines Transports von der Warte- in die Arbeitsstellung und zwei miteinander in Eingriff stehende zusammenwirkende Mittel (10, 11) vorgesehen sind, von denen eines eine Zahnstange ist,
dadurch gekennzeichnet, daß das andere zusammenwirkende Mittel ebenfalls eine Zahnstange ist, daß die erste Zahnstange (10) parallel zu der Bewegungsrichtung (X, X') der beweglichen Partie (5) der Form (3) angeordnet und mit einer der Partien dieser Form verbunden ist, und daß die zweite Zahnstange (11) mit den Haltemitteln (9) des Films (2) verbunden und in der beweglichen Partie (5) der Form (3) verschiebbar ist in der Weise, daß jede Bewegung der beweglichen Partie (5) in der vorerwähnten Bewegungsrichtung (X, X') bezüglich der festen Partie (4) ein Verschieben der zweiten Zahnstange (11) in der beweglichen Partie (5) der Form (3) und eine bestimmte Begleitbewegung der Haltemittel (9) in einer zur vorderen Stirnfläche (5a) der Form (3) parallelen Ebene, zu dieser Stirnfläche hin oder von ihr weg, mit sich zieht.

2. System nach Anspruch 1, dadurch gekennzeichnet, daß die erste (10) und die zweite (11) Zahnstange rechtwinklig zueinander angeordnet sind und Zähne (10a, 11a) aufweisen, die beispielsweise einen Winkel von wenigstens ungefähr 45° bezüglich ihrer Längsachse bilden.

3. System nach Anspruch 2, dadurch gekennzeichnet, daß die erste Zahnstange (10) mit der feststehenden Partie (4) der Form (3) verbunden ist und, ebenso wie wenigstens ein Teil der zweiten Zahnstange (11), ein gemeinsames, fest mit der beweglichen Partie (5) verbundenes Gehäuse durchsetzt.

4. System nach einem der Ansprüche 1 bis 3, dadurch gekennzeichnet, daß die Haltemittel (9) für den Film (2) wenigstens ein Saugmittel, beispielsweise eine Saugdüse (13) umfassen, das von einem zur Ebene des transportierten Films (2) im wesentlichen parallelen Arm (15) getragen ist, dessen eines Ende (16) mit der zweiten Zahnstange verbunden ist und dessen anderes Ende (17) sich entlang einer mit der beweglichen Partie (5) der Form (3) verbundenen Führungsstange (18) verschieben kann.

5. System nach einem der Ansprüche 1 bis 4, dadurch gekennzeichnet, daß die Transfervorrichtung (6) im wesentlichen über der Form (3) angeordnet ist und wenigstens ein Saugmittel, beispielsweise eine Saugdüse (20), umfaßt, die mit der beweglichen Partie (5) der Form (3) verbunden ist und durch die vordere Stirnfläche (22) des Magazins (7) der Filme (2) hindurchgehen kann, eines Magazins, dessen vordere Partie (25) Seitenwände (24) aufweist, die mit einander gegenüberliegenden innenseitigen Gleitschienen (26) ausgestattet sind, die in der geschlossenen Stellung der Form unmittelbar über Gleitschienen (27) angeordnet sind, die mit der beweglichen Partie (5) der Form (3) verbunden und über der Stirnfläche (5a) derselben vorgesehen sind.

6. System nach einem der Ansprüche 1 bis 5, dadurch gekennzeichnet, daß wenigstens ein Saugmittel, beispielsweise eine Saugdüse (29), in der beweglichen Partie der Form vorgesehen ist, um den Film in seiner Arbeitsstellung zu halten, nachdem derselbe mittels der Transfervorrichtung (6) zugeführt ist.

**Claims**

1. System for bringing a film (2), forming a coating at least partial of a molded object, between the fixed part (4) of a mold (3) and the part (5) thereof which is movable, in a predetermined direction of movement (X, X'), with respect to the fixed part (4), of the type comprising:
— a device (6) for transferring films precut to the desired format, one by one, from a magazine (7) in a waiting position in the vicinity of the mold; and
— a device (8) for transporting the film from the waiting position to a working position in which the film (2) is situated between the fixed (4) and movable (5) parts of the mold, comprising means (9) for holding the film (2) in position during its transport from the waiting position to the working position, and two cooperating members (10, 11) meshing with each other, one of said cooperating members being a rack,
characterized in that the other of said cooperating members is also a rack, and in that the first rack (10) is parallel to the direction of movement (X, X') of the movable part (5) of the mold (3) and is fixed to one of the parts therof, and the second rack (11) is fixed to the means (9) for holding the film (2) in position and may slide in the movable part (5) of the mold (3), so that any movement of the movable part (5), in said direction of movement (X, X'), with respect to the fixed part (4), causes sliding of the second rack (11) in the movable part (5) of the mold (3) and a given concomitant movement, in a plane parallel to the front face (5a) of the mold (3), of said holding means (9) towards or away from said front face (5a).

2. System according to claim 1, characterized in that said first (10) and second (11) racks are orthogonal and have teeth (10a, 11a) extending for example through an angle at least substantially equal to 45° with respect to their longitudinal axis.

3. System according to claim 2, characterized in that the first rack (10) is secured to the fixed part (4) of the mold (3) and passes, as well as at least a part of the second rack (11), through a common box (12) fixed to the mobile part (5).

4. System according to any one of claims 1 to 3, characterized in that said means (9) for holding the film (2) in position include at least one suction element, such as a nozzle (13), carried by an arm (15) generally parallel to the plane of the transported film (2), one end (16) of which is secured to the second rack and the other end (17) of which may slide along a guide (18) upright secured to the movable part (5) of the mold (3).

5. System according to any one of claims 1 to 4, characterized in that the transfer device (6) is situated generally above the mold (3) and includes at least one suction element, such as a nozzle (20), fixed to the mobile part (5) of the mold (3) and able to pass through the front face (22) of the film magazine (7) whose side walls (24) in the front part (25) have internal facing slides (26) situated, in the closed position of the mold, immediately above slides (27) fixed to the mobile part (5) of the mold (3) and provided above the front face (5a) thereof.

6. System according to any one of claims 1 to 5, characterized in that at least one suction element, such as a nozzle (29), is provided in the movable part of the mold for holding the label in the working position once it has been brought by the transfer device (6).

*Fig:1*

Fig. 2